# EUROPEAN PATENT SPECIFICATION

(11) **EP 1 759 804 B1**
(45) Date of publication and mention of the grant of the patent: **11.11.2009**
(21) Application number: 06405238.4
(22) Date of filing: 31.05.2006
(51) Int. Cl.: B23K 26/08, B23K 26/42, B23K 26/14, B24B 27/033, B24B 9/00, B23K 37/02, B23K 37/04

(54) **Laser processing machine comprising a nozzle polishing device**
Laser-Bearbeitungsmaschine mit einer eine Düse polierenden Einrichtung
Machine d'usinage laser comprenant un dispositif de polissage de buse

(30) Priority: 30.08.2005 JP 2005249695
(43) Date of publication of application: 07.03.2007
(73) Proprietor: Yamazaki Mazak Corporation, Niwa-gun, Aichi (JP)
(72) Inventor: Yamazaki, Tsunehiko, Niwa gun Aichi pref. (JP); Miyakawa, Naoomi, Niwa gun Aichi pref. (JP)
(74) Representative: Moinas, Michel

(56) References cited:
- JP-A- 2001 150 173
- US-A- 5 091 625
- US-A- 5 854 460
- DATABASE WPI Week 200160 Derwent Publications Ltd., London, GB; AN 2001-539046 XP002410461 -& JP 2001 162376 A (IRIE T) 19 June 2001 (2001-06-19)

## Description

The present invention provides a laser processing machine according to the preamble of claim 1 (Sec, for example, JP 2001/150173) .

### Description of the Related Art

In a conventional laser processing machine, predetermined standard processing conditions defined by materials and thicknesses are registered in a numeral count device (NC device). During a laser processing according to the processing conditions, any trouble in the function of a nozzle mounted to the tip of a processing torch causes imperfections in the processing such as dross forming. In order to maintain the optimal processing conditions, an operator needs to detect such a trouble of a nozzle in ahead, stop a machine, and examine the nozzle for abnormality, and when a trouble is recognized, the nozzle should be manually changed or be cleaned, any deformation of the nozzle should be adjusted, or the processing conditions should be changed. Japanese Patent Laid-Open Publication No. 2001-150173 Publication (Patent Document 1) discloses a machine having a brush for removing dross which adheres to a nozzle.

During a laser processing, some melt (sputtered material) in the processing flies above a work surface, due to the pressure of an assist gas for example, and adheres to a bottom surface of a nozzle, which makes a gap between the bottom surface of the nozzle and the upper work surface non-uniform. The patent document above described discloses a copy operation to control the position of a laser processing tool in the Z axis direction which records a Z axis coordinate by bring a nozzle into contact with a touch sensor. The patent document also discloses a method for removing contaminants such as dross adhering to a nozzle by bringing a nozzle tip to a brush so that a circular motion of the nozzle removes the contaminants.

Japanese Patent Laid-Open Publication No. 2001-162376 discloses a grinding fixture for a welding torch in order to remove slag left on the nozzle of the torch. To this end, it comprises a wire brush rotatably mounted in a body 2 with a motor 11. The torch can be cleaned by putting it into the brush, through an opening 3 arranged in the body.

Document US 5'854'460 discloses laser cutting machine driven by linear motors wherein these motors are very low maintenance, reduce friction load and help to improve accuracy. Thus, linear motors provide higher cutting speed possibilities and are also quieter.

Document US 5'091'625 discloses a plasma arc cutting device having means for removing material deposited onto a nozzle of a torch. To this end, it suggests to comprise a friction unit fixed with bolts on the table of the processing machine. The friction unit can be made of several manner, like a flat grinding stone, a wire brush, a steel block comprising a linear groove formed according to the outline of the nozzle, a block having a formed groove with at least a circular section, or a plurality of upstanding formed plates able to gradually remove the deposit material from the nozzle moving through these plates.

The present invention provides a laser processing machine having a polishing device to polish a nozzle without moving the nozzle.

### SUMMARY OF THE INVENTION

A laser processing machine according to the present invention is defined in claim 1.

According to the present invention, because a copy function is stabilized so that a gap between a bottom surface of a nozzle and an upper work surface becomes uniform, imperfections in a processing such as dross forming are not caused, which stabilizes the processing and makes an unattended operation for a long time of period possible.

### BRIEF DESCRIPTION OF THE DRAWINGS

FIG. 1 is a perspective view to generally show a laser processing machine according to the present invention;
FIG. 2 is a plan view to show a laser processing machine according to the present invention;
FIG. 3 is an elevational view to show the main parts of a laser processing machine according to the present invention;
FIG. 4 is a perspective view to show the main parts of a laser processing machine according to the present invention;
FIG. 5 is a side view to show the main parts of a laser processing machine according to the present invention;
FIG. 6 is an elevational view to show a setup station for a laser processing tool;
FIG. 7 is a plan view to show a setup station for a laser processing tool;
FIG. 8 is a view to illustrate a nozzle polishing device, not being part of the present invention;
FIG. 9 is a view to illustrate a nozzle polishing device not being part of the present invention;
FIG. 10 is a view to illustrate another example of a nozzle polishing device; and
FIG. 11 is a view to illustrate of a nozzle polishing device according to the present invention.

### DETAILED DESCRIPTION OF THE PREFERRED EMBODIMENTS

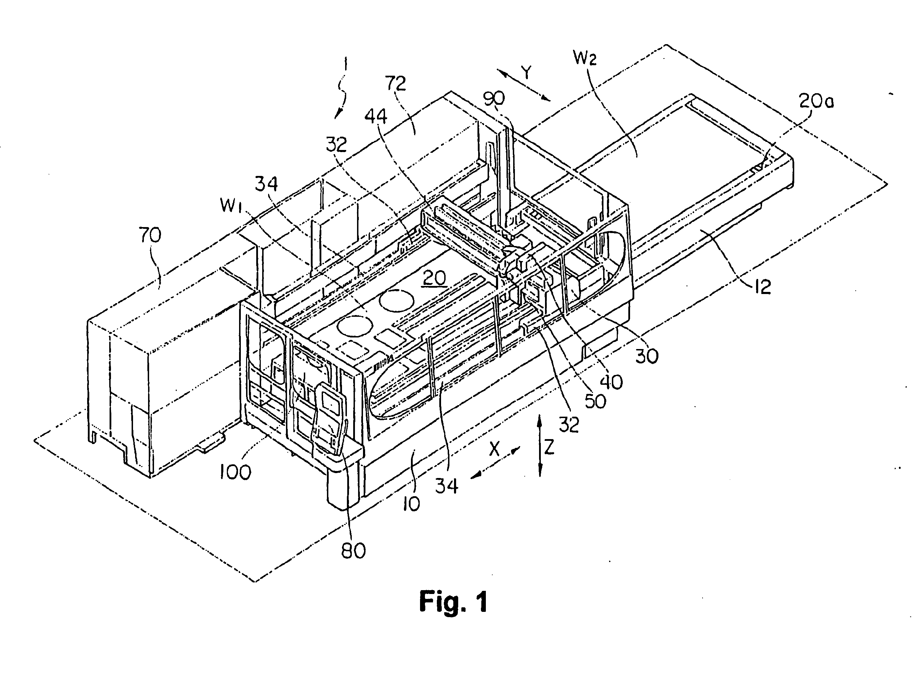

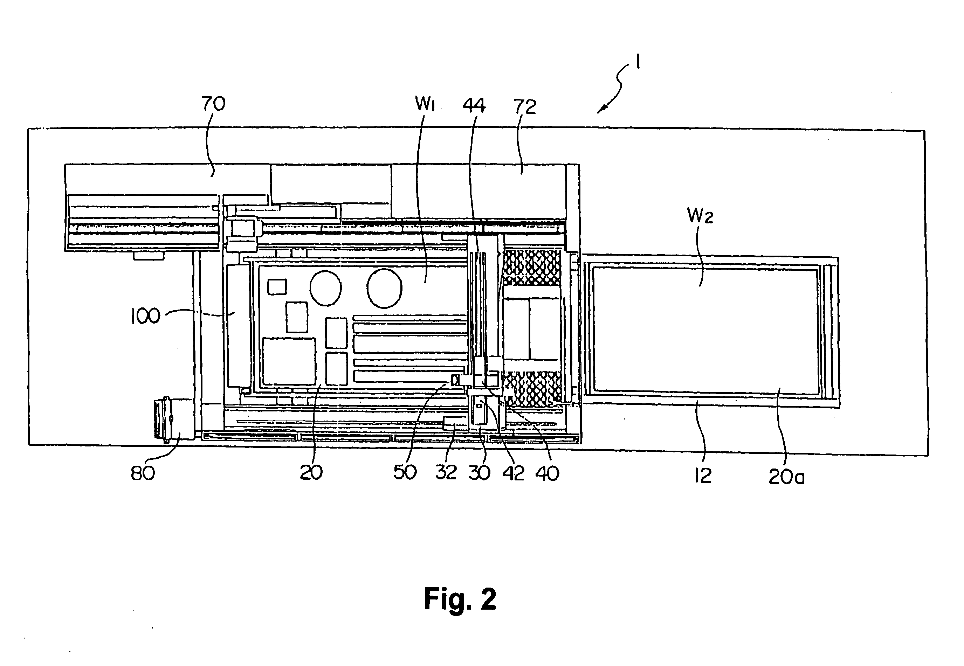

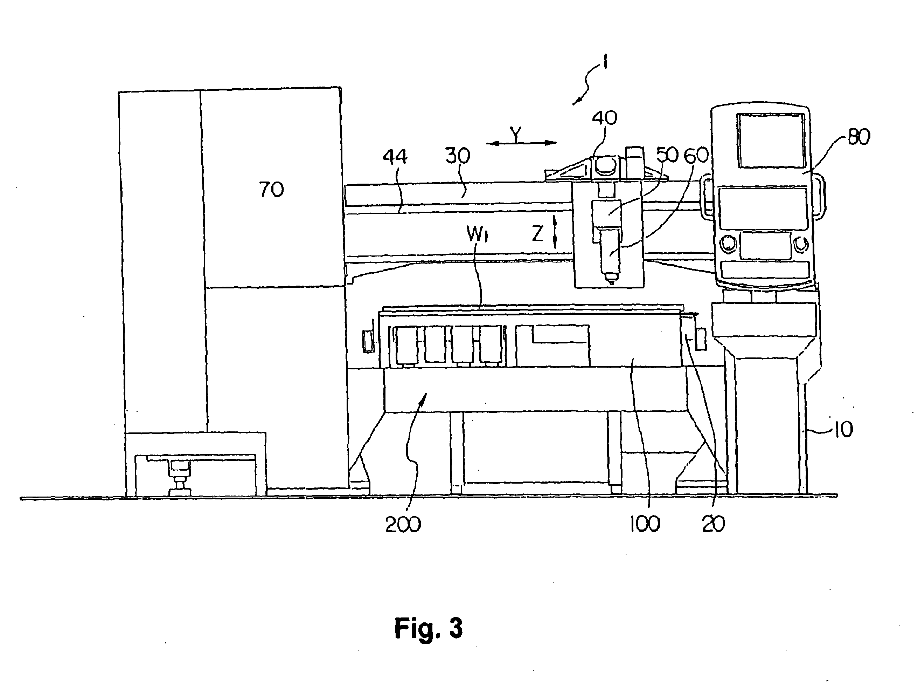

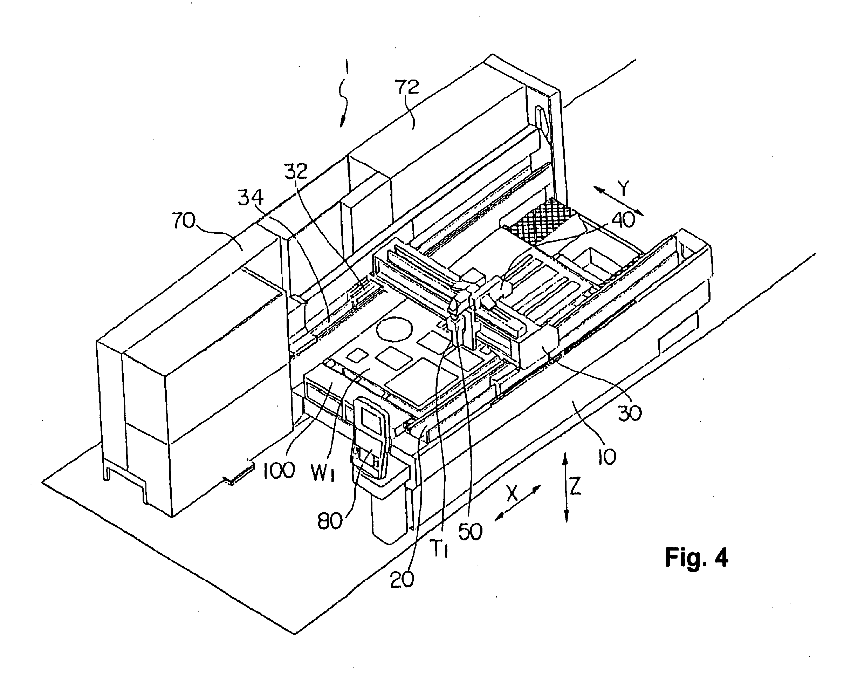

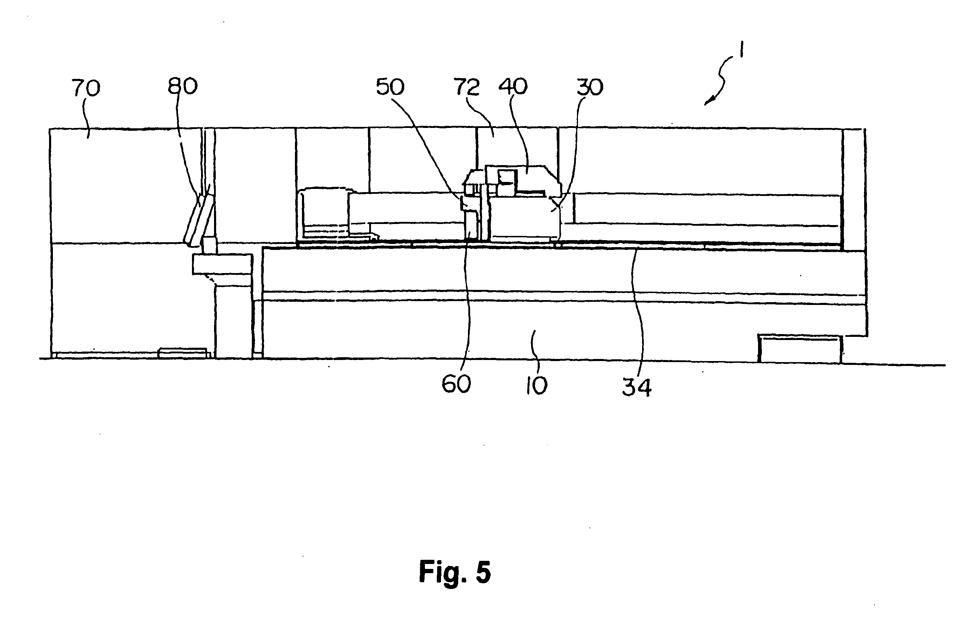

FIG. 1 is a perspective view to generally show a laser processing machine according to the present invention. FIG. 2 is a plan view of the same, FIG. 3 is an elevational view of the same, FIG. 4 is a perspective view to show the main parts of the same, and FIG. 5 is a side view to show the main parts of the same. A laser processing machine, which is generally denoted by reference numeral 1, has a bed 10 and a pallet (table) 20 disposed on the bed 10, and a sheet of a work W₁ is rested on the pallet 20. A pallet exchanging device 12 is arranged adjacent to the bed 10 in the longitudinal direction of the bed 10, having a pallet 20a on which a work W₂ is rested for a subsequent processing.

A pair of guide rails 34 are provided along both of the longitudinal sides of the bed 10, and a column 30 is mounted on the guide rails 34 to be movable in the X axis direction.

The column 30 may move in the X axis direction driven by for example a linear motor which is formed with a stator provided to the guide rails 34 and movers provided to translation guides 32.

The column 30 includes a guide rail 44 provided along the Y axis which is perpendicularly crossing the X axis to mount a saddle 40 movable in the Y axis direction. The saddle 40 includes a translation guide 42 which engages with the guide rail 44, which forms a linear motor between the guide rail 44 and the translation guide 42.

The saddle 40 includes a guide rail in the Z axis direction which is perpendicular to a plane defined by the X axis and the Y axis, and a processing head 50 is mounted to the guide rail movable along the Z axis. The processing head 50 includes an optical system into which a laser beam is introduced from a laser emitting device 72.

To the processing head 50, a laser processing tool 60 is exchangeably mounted. A processing area is covered with a cover 90 for safety. An electric cabinet 70 and the laser emitting device 72 are arranged adjacent to the bed 10. A control panel 80 through which an operator issues commands for various operations is disposed at one end of a longitudinal side of the bed 10. At one end of the bed 10 which is close to the control panel 80, a setup station 100 for a laser processing tool is equipped with.

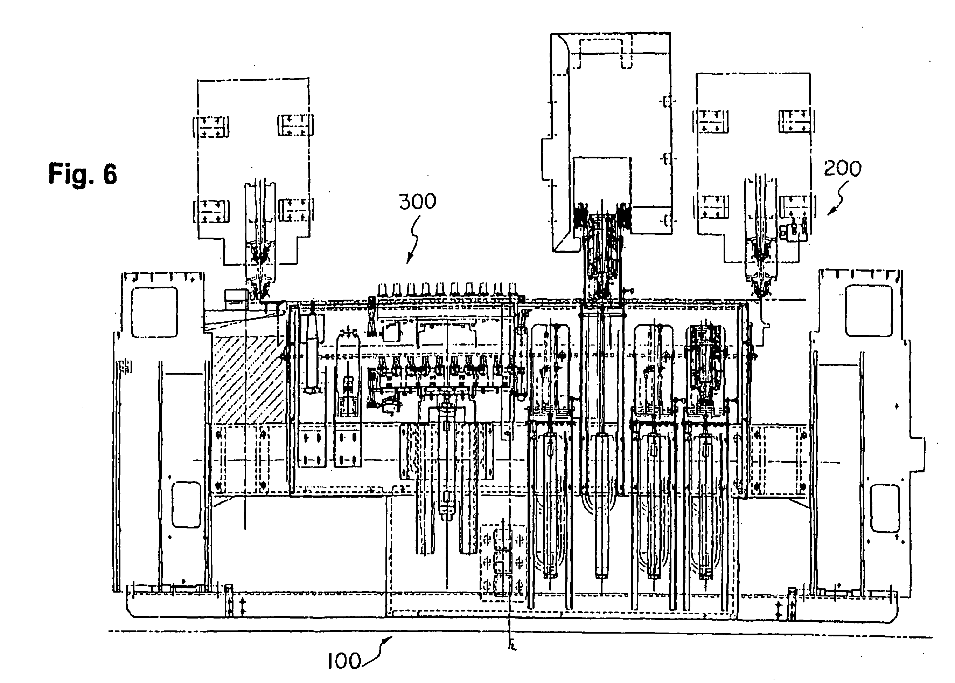

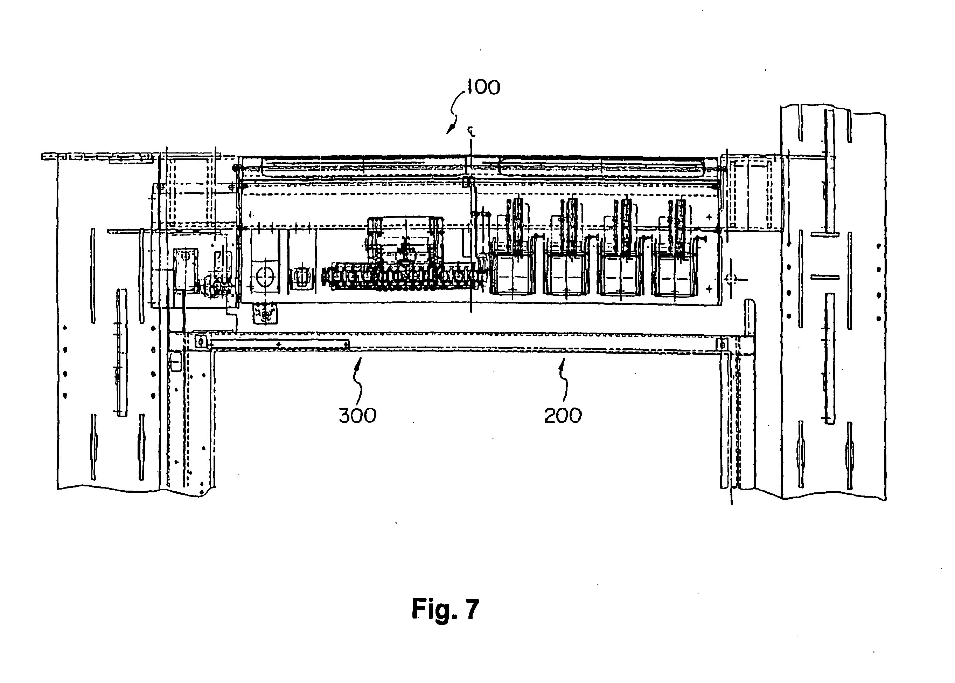

FIG. 6 is an elevational view to show the setup station 100 for a laser processing tool as seen from the table, and FIG. 7 is a plan view to show the same. The setup station 100 for a laser processing tool includes: a tool station 200 equipped with a tool change magazine for laser processing tools having a torch and a nozzle respectively; and a nozzle station 300 equipped with a nozzle change magazine for nozzles of the laser processing tools.

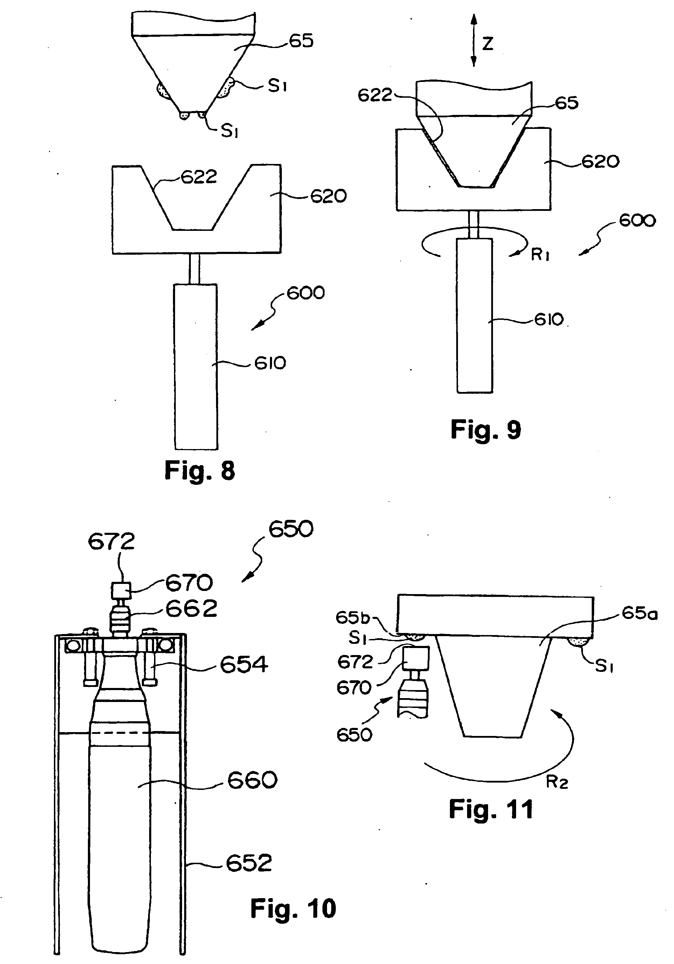

FIG. 8 is a view to illustrate a nozzle polishing device not covered by the present invention. A nozzle polishing device 600 includes a processing head 610, and the processing head 610 drives a processing tool 620 which is a formed grindstone. The processing tool 620 may be a formed grindstone having a processing surface 622 corresponding to the outer configuration of a nozzle 65. As shown in FIG. 9, a laser processing head equipped with the nozzle 65 to which sputtered material S₁ adheres is positioned above the nozzle polishing device 600, and the entire laser processing tool is lowered in the Z axis direction. Then, the processing tool 620 of the nozzle polishing device 600 is rotated and the nozzle 65 is brought into contact with the processing surface 622, thereby the sputtered material adhering to the nozzle 65 is ground and removed. FIG. 10 is a view to illustrate a nozzle polishing device. A nozzle polishing device 650 has a frame 652 and a processing head 660 which is supported with bolts 654 in the frame 652. The processing head 660 is equipped with a motor therein, and has a rotation shaft 662 mounted with a cylindrical grindstone 670. The cylindrical grindstone 670 has an upper surface 672 which is used to polish and remove contaminants such as dross adhering to a bottom end surface of the nozzle 65.

FIG. 11 is a view to illustrate a nozzle polishing device according to the present invention. A nozzle 65a includes a flange portion 65b, and sputtered material S₁ adhering to the flange portion 65b sometimes causes imperfections in a processing. Thus, a nozzle polishing device 650 is used so that an upper surface 672 of a cylindrical grindstone 670 is brought into contact with the flange portions 65b of the nozzle 65a to remove the sputtered material S₁. The nozzle polishing device 650 is moved in circle along the flange portions 65b in the direction shown by an arrow R₂ to complete the removal of the sputtered material S₁.

In the above examples, a grindstone is used as a polishing tool for a nozzle, but of course, other tools such as a carbide tool may be used as needed.

## Claims

1. A laser processing machine (1) comprising:
a bed (10); a pallet (20) disposed on the bed (10) to support a work (W1); a column (30) a X axis being the longitudinal axis of the bed (10); a saddle (40) which is supported by the column (30) and is controlled to move along the Y axis, the Y axis being perpendicularly crossing the X axis; and
a processing head (50) which is supported by the saddle (40) and is controlled to move along a Z axis, perpendicularly to the X axis and the Y axis; said processing head (50) supports a laser processing tool comprising a nozzle (65a) with flange portions (65b), and
a nozzle polishing device (650) comprising a processing tool (670),
**characterised in that**
the column (30), is controlled to move along the X axis, and
said nozzle polishing device (650) comprises a processing head (660) equipped with a motor therein for rotating the processing tool (670), and
said nozzle polishing device (650) comprises means for moving in circle along the flange portions (65b) of the nozzle (65a) to remove sputtered material (S1) having adhered to said nozzle (65a) during the process of the machine (1).

2. A laser processing machine (1) according to claim 1, wherein said processing tool (670) is a grinding tool.

3. A laser processing machine (1) according to claim 2, wherein said grinding tool (670) has a cylindrical shape.

4. A laser processing machine (1) according to claim 2 or 3, wherein said grinding tool (670) is made of a grindstone or carbide.

5. A laser processing machine (1) according to any one of claims 1 to 4, wherein further comprising Supplementary nozzle polishing devices (650), each of these supplementary nozzle polishing device (650) being equipped with a polishing tool (670) corresponding to a type of a nozzle (65a).

6. A method of cleaning flange portions (65b) of a nozzle (65a) using a laser processing machine (1) according to any one of preceding claims, by moving into circle the nozzle polishing device (650) along the flange portions (65b) of the nozzle (65a) to complete the removal of the sputtered material (S1).

## Patentansprüche

1. Laserbearbeitungsmaschine (1)
mit einem Bett (10), mit einem Träger (20), der auf dem Bett (10) angeordnet ist, um ein Werkstück (W1) zu tragen, mit einem Säulenteil (30), mit einer X-Achse, die die Längsachse des Bettes (10) ist, mit einem Sattelteil (40), das durch das Säulenteil (30) getragen und zum Bewegen entlang der Y-Achse angesteuert ist, wobei die Y-Achse die X-Achse rechtwinklig kreuzt, und
mit einem Bearbeitungskopf (50), der durch das Sattelteil (40) getragen und zum Bewegen entlang einer Z-Achse angesteuert ist, die rechtwinklig zu der X-Achse und zu der Y-Achse ist, wobei der Bearbeitungskopf (50) ein Laserbearbeitungswerkzeug trägt, das eine mit Flanschabschnitten (65b) ausgestattete Düse (65a) aufweist, und
mit einer Düsenpoliervorrichtung (650), die über ein Bearbeitungswerkzeug (670) verfügt, **dadurch gekennzeichnet,**
**dass** das Säulenteil (30) zum Bewegen entlang der X-Achse angesteuert ist,
**dass** die Düsenpoliervorrichtung (650) einen Bearbeitungskopf (660) aufweist, der mit einem darin angeordneten Motor ausgestattet ist, um das Bearbeitungswerkzeug (670) zu drehen,
und **dass** die Düsenpoliervorrichtung (650) über Mittel zum kreisförmigen Bewegen entlang der Flanschabschnitte (65b) der Düse (65a) verfügt, um abgeplatztes Material (S1) zu entfernen, das während der Laufzeit der Maschine (1) an der Düse (65a) angehaftet ist.

2. Laserbearbeitungsmaschine (1) nach Anspruch 1, bei der das Bearbeitungswerkzeug (670) ein Schleifwerkzeug ist.

3. Laserbearbeitungsmaschine (1) nach Anspruch 2, bei der das Schleifwerkzeug (670) eine zylinderartige Gestalt hat.

4. Laserbearbeitungsmaschine (1) nach Anspruch 2 oder 3, bei der das Schleifwerkzeug (670) aus einem Schleifstein oder aus Hartmetall hergestellt ist.

5. Laserbearbeitungsmaschine (1) nach einem der Ansprüche 1 bis 4, bei der weiterhin zusätzliche Düsenpoliervorrichtungen (650) vorhanden sind, wobei jede dieser zusätzlichen Düsenpoliervorrichtungen (650) mit einem Schleifwerkzeug (670) ausgestattet ist, das einem Typ einer Düse (65a) entspricht.

6. Verfahren zum Reinigen von Flanschabschnitten (65b) einer Düse (65a) bei einer Laserbearbeitungsmaschine (1) gemäß einem der vorangehenden Ansprüche durch kreisförmiges Bewegen der Düsenpoliervorrichtung (650) entlang der Flanschabschnitte (65b) der Düse (65a), um das Entfernen von abgeplatztem Material (S1) abzuschließen.

## Revendications

1. Une machine d'usinage laser (1) comprenant :
une base (10) ; un support (20) disposé sur le lit (10) pour supporter une pièce (W1) ; une colonne (30) ayant un axe X qui est l'axe longitudinal de la base (10) ; un chariot (40) qui est supporté par la colonne (30) et commandé pour se déplacé le long de l'axe Y, cet axe Y croisant perpendiculairement l'axe X ; et
une tête d'usinage (50) qui est supportée par le chariot (40) et est commandée pour se déplacer le long d'un axe Z, perpendiculairement à l'axe X et à l'axe Y ; ladite tête d'usinage (50) supportant un outil d'usinage laser comprenant une buse (65a) avec des parties débordantes (65b) ; et
un dispositif de polissage de buse (650) comprenant un outil d'usinage (670),
**caractérisée en ce que**
la colonne (30) est commandée pour se déplacer le long de l'axe X ; et
ledit dispositif de polissage de buse (650) comprend une tête d'usinage (660) équipée d'un moteur à l'intérieur pour entraîner en rotation l'outil d'usinage (670) ; et
ledit dispositif de polissage de buse (650) comprend des moyens pour se déplacer en cercle le long des parties débordantes (65b) de la buse (65a) pour éliminer les matériaux pulvérisés (S1) ayant adhéré à ladite buse (65a) durant le fonctionnement de la machine (1).

2. Une machine d'usinage laser (1) selon la revendication 1, dans laquelle ledit outil d'usinage (670) est un outil d'abrasion.

3. Une machine d'usinage laser (1) selon la revendication 2, dans laquelle ledit outil d'abrasion (670) a une forme cylindrique.

4. Une machine d'usinage laser (1) selon la revendication 2 ou 3, dans laquelle ledit outil d'abrasion (670) est constitué d'une pierre meulière ou d'un carbure.

5. Une machine d'usinage laser (1) selon l'une quelconque des revendications 1 à 4, comprenant en outre des dispositifs supplémentaires de polissage de buse (650), chacun de ces dispositifs supplémentaires de polissage de buse (650) étant équipé d'un outil de polissage (670) correspondant à un type de buse (65a).

6. Procédé de nettoyage des parties débordantes d'une buse (65a) utilisant une machine d'usinage laser (1) selon l'une quelconque des revendications précédentes, en faisant se déplacer en cercle le dispositif de polissage de buse (650) le long des parties débordantes (65b) de la buse (65a) pour réaliser l'élimination du matériau pulvérisé (S1).
